# EUROPÄISCHE PATENTSCHRIFT

(11) **EP 0 502 432 B1**
(45) Veröffentlichungstag und Bekanntmachung des Hinweises auf die Patenterteilung: **27.12.1995**
(21) Anmeldenummer: 92103420.3
(22) Anmeldetag: 28.02.1992
(51) Int. Cl.: A22C 13/00

(54) **Schlauchförmige Nahrungsmittelhülle mit verbesserter Abschälbarkeit**
Tubular casings for foodstuffs with an improved peel-off ability
Enveloppes tubulaires pour aliments ayant une pelabilité améliorée

(30) Priorität: 07.03.1991 DE 4107239
(43) Veröffentlichungstag der Anmeldung: 09.09.1992
(73) Patentinhaber: HOECHST AKTIENGESELLSCHAFT, 65926 Frankfurt am Main (DE)
(72) Erfinder: Hammer, Klaus-Dieter, Dr., W-6500 Mainz-Mombach (DE); Siebrecht, Manfred, Dr., W-6200 Wiesbaden (DE); Winter, Hermann, W-6200 Wiesbaden (DE)

(56) Entgegenhaltungen:
- EP-A- 0 038 628
- EP-A- 0 088 308
- EP-A- 0 109 611
- EP-A- 0 400 484
- DE-A- 1 492 711
- DE-A- 4 002 083

## Beschreibung

Die Erfindung bezieht sich auf eine schlauchförmige Nahrungsmittelhülle auf Basis von Cellulose mit einem auf ihrer inneren Oberfläche vorhandenen Überzug zur Verbesserung der Abschälbarkeit der Hülle vom Füllgut und auf die Verwendung der Nahrungsmittelhülle. Insbesondere bezieht sich die Erfindung auf Schälerhüllen, die für Würstchenbrät und Brühwursttypen verwendet werden und auf automatischen Schälmaschinen, die mit hoher Geschwindigkeit arbeiten, sehr gute Schälbarkeiten liefern. Darüber hinaus wurde gefunden, daß sich die Innenpräparation für die o.g. Nahrungsmittelhüllen auch für Schmal- und Kranzhüllen eignet, die beispielsweise für geräucherte Fleischwürste und grobe Mettwürste eingesetzt werden.

Hüllen der gattungsgemäßen Art sind bereits aus der EP-A-109 611 bekannt und besitzen auf ihrer Innenseite einen Überzug aus einer Mischung aus einem wasserlöslichen Celluloseäther, einem Wachs und einem Öl. Eine aus der DE-A-34 47 026 bekannte Hülle gleicher Gattung enthält in einem innenseitig aufgebrachten Überzug neben einer Chrom-Fettsäure-Komplexverbindung und einem Dialkylpolysiloxan zusätzlich ebenfalls Celluloseäther und Wachs. Alle bekannten Rezepturen zur Verbesserung der Abschälbarkeit besitzen relativ komplizierte Zusammensetzungen, und sie lassen, insbesondere bei problematischen Füllgütern, im Hinblick auf ihre Wirksamkeit noch zu wünschen übrig.

Neben den nicht-eßbaren Nahrungsmittelhüllen auf Basis von Cellulose sind auch eßbare Hüllen auf Basis von Polysacchariden, wie Alginsäure oder Alginat, Chitosan, Pectin, Stärke, Furcellaran, Carrageenan und Agar, bekannt (EP-A 0 400 484). In heißem Wasser lösen sich diese Hüllen auf. Durch eine ein- oder beidseitig aufgebrachte Schicht aus einem wasserlöslichen Protein kann die eßbare Hülle heißsiegelfähig gemacht werden.

Eßbare Wursthüllen werden jedoch in der Regel auf Kollagenbasis hergestellt. Beim Kochen der Wurst soll die Hülle möglichst im selben Maß schrumpfen wie der Inhalt. Um eine solche schrumpffähige Hülle herzustellen, wurde dem zerkleinerten und zu einer Paste vermahlenen Kollagen Natriumalginat zugemischt, die Mischung dann extrudiert und in einer wäßrigen Metallsalzlösung ausgehärtet (DE-A 14 92 711).

Aufgabe der vorliegenden Erfindung war es, eine Nahrungsmittelhülle mit einer Innenpräparation (Innenbeschichtung) anzugeben, bei der die Beschichtungszusammensetzung aus möglichst wenig Einzelkomponenten aufgebaut ist und die trotzdem ein breites Wirkungsspektrum besitzt, was ihre Abschälbarkeit von verschiedenen Füllgütern betrifft.

Gelöst wird diese Aufgabe durch eine Nahrungsmittelhülle der eingangs genannten Gattung, deren Kennzeichenmerkmal darin besteht, daß der Überzug Alginate, Alginsäure, Chitosane oder eine Kombination von diesen enthält.

Bei der erfindungsgemäßen Nahrungsmittelhülle handelt es sich bevorzugt um eine künstliche Wursthülle, insbesondere um eine wässerungsfreie Wursthülle, die geeignet ist für das Brühen, Räuchern und automatische Schälen von kleinen Brühwürstchen. Der spezielle Überzug auf der Innenseite zeigt verringerte Haftung zwischen der Innenwand der Hülle und dem bevorzugt für klein- und mittelkalibrige Hüllen und Kranzdarm aber auch für großkalibrige Hüllen typischen Füllgut, insbesondere wenn das Füllgut ein Wurstbrät ist für Brühwürstchen, wie Frankfurter Würstchen, oder wie Jagdwurst, Bierschinken, Fleischwurst, Mortadella, Gelbwurst oder Lyoner, aber auch für Räucherwurst und Rohwurst wie grobe Mettwurst, wobei letztere insbesondere in gekrümmten oder ringförmigen Hüllen aus Cellulose ohne Faserverstärkung hergestellt wird.

Die Nahrungsmittelhülle besteht aus einem Trägerschlauch Basis von Cellulose und dem zur Verbesserung der Abschälbarkeit der Hülle vom Füllgut vorgesehenen Überzug auf ihrer Innenwand.

Das Basismaterial für den Trägerschlauch ist Cellulose (Zellglas, regenerierte Cellulose, Cellulosehydrat) und wird auf übliche Weise als nahtloser Schlauch durch Koagulation und Regenerieren vorzugsweise aus Viskoselösung hergestellt. Es ist auch möglich, Schläuche mit einer Klebenaht zu verwenden, die durch Falten einer Bahn und Verbinden der Ränder hergestellt werden (EP-A-0 050 702, EP-A-0 058 240). Für die Verwendung der Hülle zur Herstellung von Würsten vom Brühwurst-Typ großen Kalibers verwendet man einen Trägerschlauch aus Cellulose mit einer Faserverstärkung, die beispielsweise in Form einer Papierbahn in der Wandung des Trägerschlauchs eingebettet ist. Zur Herstellung von gekrümmten oder ringförmigen Würsten, wie Rohwürste, insbesondere grobe Mettwürste, verwendet man Trägerschläuche in gekrümmter oder in abgerundeter Ringform, sogenannte Kranzdärme, welche keine Faserverstärkung aufweisen. Die Krümmung wird beispielsweise durch einseitige Verdehnung des Schlauches bei seiner Herstellung erzeugt, es sind aber auch andere Verfahren bekannt (US-A-2,136,566, US-A-2,925,621, US-A-3,679,435, EP-A-0 050 702).

Die Nahrungsmittelhülle kann als flachgelegter Schlauch zum Füllen mit Füllgut eingesetzt werden. Es lassen sich auch geraffte Schlauchhüllen, sog. Raupen, herstellen, wobei man übliche Raffvorrichtungen (US-A-3,988,804) einsetzt. Hierbei hat sich gezeigt, daß mit der Innenbeschichtung nicht nur eine verbesserte Trennwirkung zwischen Füllgut und Hülleninnenwand erzielt wird, sondern daß sich auch noch zusätzliche Vorteile beim Aufwickeln, Lagern, Raffen und Verarbeiten ergeben. So sorgt die Innenbeschichtung dafür, daß die auf einer Rolle aufgewickelten Schläuche nicht haften oder verkleben. Auch Hüllenabschnitte verkleben bei längerer Lagerung nicht und lassen sich vor dem Befüllen mit Wurstbrät, insbesondere auf automatischen Füllmaschinen, problemlos öffnen. Ferner sind die Schläuche besonders gleitfähig und weich und lassen sich deshalb problemlos raffen.

Der Überzug enthält erfindungsgemäß Alginate, Alginsäure und/oder Chitosane. Alginate sind Salze der Alginsäure, insbesondere Alkali- oder Erdalkalisalze. Alginsäure selbst ist ein farbloses, Carboxylgruppen enthaltendes Polysaccharid mit einem mittleren Molekulargewicht zwischen 100 000 und 240 000. Chemisch besteht Alginsäure aus 1,4-glykosidisch verknüpften D-Mannuronsäureeinheiten mit gelegentlichen Einschüben von α-glykosidisch gebundenen L-Guluronsäureeinheiten. Alginsäure als solche ist ein Naturprodukt und findet sich in beträchtlichen Mengen in den Braunalgen des Meeres.

Die Chitosane sind eine Verbindungsgruppe, die sich von natürlich vorkommendem Chitin ableitet. Sie entstehen durch Desacetylierung und teilweise Depolymerisierung von Chitin mit Hilfe von starken Alkalien. Chemisch handelt es sich um β-glykosidisch gebundene Poly-N-acetylglucosamine, deren Acetylgruppen durch die Einwirkung der starken Alkalien in mehr oder weniger großem Umfang verseift sind. Die Chitosane besitzen ein mittleres Molekulargewicht von etwa 400 000.

Die Auftragsmenge der hydrophilen Wirkkomponente/n (Alginat, Alginsäure, Chitosan) liegt erfindungsgemäß im Bereich von 5 bis 100 mg/m², vorzugsweise im Bereich von 10 bis 70 mg/m², bezogen auf das Trockengewicht der Hülle. Der Auftrag erfolgt erfindungsgemäß aus einer wässrigen Überzugszusammensetzung mit einer Konzentration der Wirkkomponenten im Bereich von 0,5 bis 4,0 Gew.-%, vorzugsweise im Bereich von 1 bis 3 Gew.-%, bezogen auf das Gesamtgewicht der Präparationslösung.

Der Überzug der erfindungsgemäßen Nahrungsmittelhülle enthält bevorzugt noch weitere Gleit-, Raffhilfs- und Trennmittel als Zuschlagstoffe. Hierzu eignen sich insbesondere die verschiedensten Öle, z.B. natürliche Öle wie Olivenöl oder Rapsöl oder synthetische Mono-, Di- und Triglyceride, Paraffinöle, Siliconöle und/oder Wachse. Bevorzugte Wachse sind Säurewachse auf Basis von Rohmontanwachs. Sie sind beispielsweise erhältlich unter der Bezeichnung Hoechst-Wachs, Typ E, X22, F, KP 301, KPS, KSL, KSS, KST, KFO, U, BJ oder RT. Bevorzugt wird der Typ KPS eingesetzt, ein Äthandiolester der Montansäure. Die Zuschlagstoffe werden der wässrigen Überzugszusammensetzung in Mengen von 0,5 bis 30 Gew-%, vorzugsweise von 1 bis 5 Gew-%, bezogen auf das Gesamtgewicht der wässrigen Präparationslösung zugegeben.

Zum Emulgieren der Zuschlagstoffe können die üblichen Emulgatoren, z.B. Alkylsulfonate, Alkylarylsulfonate, Alkylsulfate, Alkylarylsulfate oder nichtionogene Emulgatoren wie äthoxylierte Alkohole oder Amine zugegeben werden.

Auch Monofettsäureester oder mehrwertige Alkohole wie Sorbitmonoester oder Alkandiole, wie 1,2-Propandiol, sind als Emulgatoren geeignet. Die Emulgatoren werden in Mengen von 5 bis 50 Gew-%, bezogen auf das Gewicht der Präparationslösung, angewandt. Es hat sich überraschenderweise gezeigt, daß insbesondere die Alkandiole, und hier bevorzugt 1,2-Propandiol, einen zusätzlichen stabilisierenden Effekt auf die Hüllen, insbesondere auf die grafften Hüllen (Raupen) ausüben, bevorzugt auf solche, welche aus einer labileren Grundware aufgebaut sind.

Als besonders geeignet für Schäldarmtypen haben sich Präparationslösungen erwiesen, die neben Alginat, Alginsäure und/oder Chitosan sowohl ein Öl als auch ein Wachs enthielten.

Die erfindungsgemäße Nahrungsmittelhülle wird hergestellt nach den üblichen Verfahren zur Herstellung von Nahrungsmittelhüllen, insbesondere Wursthüllen, auf Basis von Cellulose, die sich vom Füllgut, insbesondere von der Wurstmasse, leicht abschälen lassen.

Der Auftrag der Innenbeschichtung auf die Innenseite der Schlauchhülle erfolgt auf übliche Weise, beispielsweise durch Einfüllen einer Beschichtungsflüssigkeit in die Schlauchhülle (GB-A-1 201 830, US-A-2,901,358, DE-A-28 01 038, DE-C-30 12 250) oder durch Aufsprühen der Beschichtungsflüssigkeit in die Schlauchhülle während des Raffprozesses, z.B. durch den hohlen Raffdorn (US-A-3,451,827). Die Auftragstemperatur ist gewöhnlich gleich der Umgebungstemperatur, d.h. sie liegt bei etwa 15 bis 30°C.

Das Einfüllen der Beschichtungsflüssigkeit in die Schlauchhülle erfolgt zweckmässigerweise bereits bei der Herstellung der Schlauchhülle, z.B. nach der Fällung des Cellulosehydrat-Gels aus Viskose und vor der Trocknung.

Wenn die erfindungsgemäßen Wursthüllen bei ihrem bestimmungsgemäßen Einsatzzweck mit Wurstbrät befüllt, gebrüht und geräuchert werden, lassen sich die Hüllen auf automatischen Schälvorrichtungen völlig problemlos entfernen. Der erfindungsgemäße Überzug hat sich sowohl bei Cellulosehüllen als auch bei faserverstärkten Cellulosehüllen in der Praxis bewährt.

Die Erfindung wird durch die folgenden Beispiele näher erläutert, ohne jedoch auf die speziell dargestellten Ausführungsformen beschränkt zu sein.

### Beispiel 1

20 Gew.-Tle. Na-Alginat (Protacell® 20, Protan GmbH, Norderstedt) werden unter starkem Rühren in 925 Gew.-Tln. Wasser gelöst. Der Lösung werden weitere 30 Gew.-Tle. einer 50 %igen synthetischen Glyceridmischung (SOFTENOL®, Dynamit Nobel) und 25 Gew.-Tle. einer 20-%igen Wachsemulsion zugesetzt (KPS-Wachs, Hoechst AG, Gersthofen)

Die entstandene Überzugszusammensetzung wird in einen Schälergelschlauch des Kalibers 23 mm eingefüllt und dann in aufgeblasenem Zustand getrocknet, befeuchtet und danach zu Raupen gerafft. Die Raupen werden mit Würstchenbrät gefüllt, gekocht, geräuchert und automatisch geschält. Beim Schälen ließen sich alle Hüllen ausnahmslos ohne irgendwelche Probleme entfernen, ein Geleeabsatz ist nicht aufgetreten.

### Beispiel 2

Eine Überzugszusammensetzung wurde hergestellt aus:

| | |
|---|---|
| 900 Gew.Tln. | Wasser |
| 20 Gew.Tln. (2,0 %) | Na-Alginat (Protacell 20) |
| 30 Gew.Tln. (1,5 %) | Softenol-Emulsion (50%ig) |
| 50 Gew.Tln. (1,0 %) | KPS-Wachsemulsion (20%ig) |

Mit der so hergestellten Überzugszusammensetzung wurde ein Kranzdarm mit einem Kaliber von 43 mm wie Beispiel 1 innenpräpariert. Die Hüllen ließen sich von grober Mettwurst problemlos abschälen.

### Beispiel 3

Eine Überzugszusammensetzung wurde hergestellt aus:

| | |
|---|---|
| 885 Gew.-Tln. | Wasser |
| 30 Gew.-Tln. (3,0 %) | Na-Alginat (Protacell 20) |
| 60 Gew.-Tln. (3,0 %) | Softenol-Emulsion (50%ig) |
| 25 Gew.-Tln. (0,5 %) | KPS-Wachsemulsion (20%ig). |

Mit der Überzugszusammensetzung wurde die innere Oberfläche einer Faserhülle mit einem Kaliber von 60 mm wie in Beispiel 1 präpariert. Die so hergestellte Wursthülle ließ sich sehr gut von geräucherter Brühwurst abschälen.

### Beispiel 4

Eine Überzugszusammensetzung wurde hergestellt aus:

| | |
|---|---|
| 930 Gew.-Tln. | Wasser |
| 20 Gew.-Tln. (2,0 %) | Chitosan (Sea-Cure®110 L), Protan GmbH, Norderstedt) |
| 30 Gew.-Tln. (1,5 %) | Softenol-Emulsion (50%ig) |
| 25 Gew.-Tln. (0,5 %) | KPS-Wachs-Emulsion (20%ig) |

Mit der so hergestellten Überzugszusammensetzung wurde die Innenpräparation eines Schmal-Gelschlauchs mit einem Kaliber von 38 mm wie in Beispiel 1 beschrieben durchgeführt. Bei geräucherter Fleischwurst ergab sich eine sehr leichte Schälbarkeit.

### Beispiel 5

Eine Überzugszusammensetzung wurde hergestellt aus:

| | |
|---|---|
| 910 Gew.-Tln. | Wasser |
| 30 Gew.-Tln. (3,0 %) | Chitosan (Sea-Cure 110 L) |
| 60 Gew.-Tln. (3,0 %) | Softenol-Emulsion (50%ig) |

Die hergestellte Überzugszusammensetzung wurde für die Innenpräparation von Kranzdarm mit einem Kaliber von 43 mm, wie in Beispiel 1 beschrieben, eingesetzt, der sich dann von grober Mettwurst leicht abschälen ließ.

### Beispiel 6

Eine Überzugszusammensetzung wurde hergestellt aus:

| | |
|---|---|
| 700 Gew.-Tln. | Wasser |
| 20 Gew.-Tln. (2,0 %) | Na-Alginat (rotacell 20) |
| 30 Gew.-Tln. (1,5 %) | Softenol-Emulsion (50%ig) |
| 25 Gew.-Tln. (0,5 %) | KPS-Wachs-Emulsion (20%ig) |
| 225 Gew.-Tln. (22,5 %) | 1,2-Propandiol |

Die hergestellte Überzugszusammensetzung wurde für die Innenpräparation von Schäldarm mit einem Kaliber von 21 mm, wie in Beispiel 1 beschrieben, eingesetzt. Die gerafften Hüllen zeigten eine erhöhte Stabilität, die Schälbarkeit bei Würstchen war ausgezeichnet.

### Beispiel 7

Eine Überzugszusammensetzung wurde hergestellt aus:

| | | |
|---|---|---|
| 832 Gew.-Tln. | | Wasser |
| 20 Gew.-Tln. | (2,0 %) | Chitosan (Sea-Cure 110 L) |
| 30 gew.-Tln. | (1,5 %) | Softenol-Emulsion (50%ig) |
| 25 Gew.-Tln. | (0,5 %) | KPS-Wachs-Emulsion (20%ig) |
| 93 Gew.-Tln. | (9,3 %) | 1,2-Propandiol |

Die hergestellte Überzugszusammensetzung wurde für die Innenpräparation von Schmaldarm mit einem Kaliber von 40 mm, wie in Beispiel 1 beschrieben, eingesetzt. Die gerafften Hüllen zeigten eine erhöhte Stabilität, die Schälbarkeit bei geräucherter Fleischwurst war ausgezeichnet.

### Beispiel 8

Eine Überzugszusammensetzung wurde hergestellt aus:

| | |
|---|---|
| 879 Gew.-Tln. | Wasser |
| 20 Gew.-Tln. (2,0 %) | Chitosan (Sea-Cure 110L) |
| 30 Gew.-Tln. (1,5 %) | Softenol-Emulsion (50%ig) |
| 25 Gew.-Tln. (0,5 %) | KPS-Wachs-Emulsion (20%ig) |
| 46 Gew.-Tln. (4,6 %) | 1,2-Propandiol |

Die hergestellte Überzugszusammensetzung wurde für die Innenpräparation von Schäldarm mit einem Kaliber von 23 mm, wie in Beispiel 1 beschrieben, eingesetzt. Die gerafften Hüllen zeigten eine erhöhte Stabilität, die Schälbarkeit bei Würstchen war ausgezeichnet.

## Patentansprüche

1. Schlauchförmige Nahrungsmittelhülle auf Basis von Cellulose mit einem auf ihrer inneren Oberfläche vorhandenen Überzug zur Verbesserung der Abschälbarkeit der Hülle vom Füllgut, dadurch gekennzeichnet, daß der Überzug Alginate, Alginsäure, Chitosane oder eine Kombination von diesen enthält.

2. Nahrungsmittelhüle nach Anspruch 1, dadurch gekennzeichnet, daß es sich um eine Wursthülle handelt.

3. Nahrungsmittelhülle nach Anspruch 1 oder 2, dadurch gekennzeichnet, daß die Cellulose als nahtloser Schlauch durch Koagulation und Regenerieren aus Viskoselösung hergestellt wird.

4. Nahrungsmittelhülle nach einem der Ansprüche 1 bis 3, dadurch gekennzeichnet, daß die Auftragsmenge an Alginat, Alginsäure, Chitosan oder einer Kombination dieser Stoffe im Bereich von 5 bis 100 mg/m² Trockengewicht der Nahrungsmittelhülle liegt.

5. Nahrungsmittelhülle nach Anspruch 4, dadurch gekennzeichnet, daß die Auftragsmenge der Wirkkomponente/n im Bereich von 10 bis 70 mg/m² Trockengewicht liegt.

6. Nahrungsmittelhülle nach einem der Ansprüche 1 bis 5, dadurch gekennzeichnet, daß der Auftrag des Überzuges aus einer wässrigen Überzugszusammensetzung mit einer Wirkstoffikonzentration im Bereich von 0,5 bis 4,0 Gew.-%, vorzugsweise im Bereich von 1 bis 3 Gew.-%, bezogen auf das Gesamtgewicht der wässrigen Überzugszusammensetzung erfolgt.

7. Nahrungsmittelhülle nach einem der Ansprüche 1 bis 6, dadurch gekennzeichnet, daß der Überzug noch einen oder mehrere Zuschlagstoffe ausgewählt aus Olivenöl, Rapsöl, synthetischen Mono-, Di- und Triglyceriden, Paraffinölen, Siliconölen und Wachsen enthält.

8. Verwendung einer Nahrungsmittelhülle nach einem der Ansprüche 1 bis 7 zur Herstellung von grober Mettwurst, geräucherter Brühwurst oder geräucherter Fleischwurst.

## Claims

1. Tubular food casing based on cellulose which on its inner surface is provided with a coating for improving its peelability from its contents, characterized in that said coating comprises alginates_{,} alginic acid, chitosans or a combination thereof.

2. Food casing as claimed in claim 1, characterized in that it is a sausage casing.

3. Food casing as claimed in claim 1 or 2, characterized in that the cellulose is produced in the form of a seamless tubing, by coagulation and regeneration from a viscose solution.

4. Food casing as claimed in any of claims 1 to 3, characterized in that the applied amount of alginate, alginic acid, chitosan or a combination of these substances is in the range of 5 to 100 mg/m²_{,} based on the dry weight of the food casing.

5. Food casing as claimed in claim 4, characterized in that the applied amount is in the range of 10 to 70 mg/m² of dry weight.

6. Food casing as claimed in any of claims 1 to 5, characterized in that application of the coating is performed from an aqueous coating composition having a concentration of active substance in the range of 0.5 to 4.0 % by weight, preferably in the range of 1.0 to 3.0 % by weight, relative to the total weight of the aqueous coating composition.

7. Food casing as claimed in any of claims 1 to 6, characterized in that the coating additionally comprises one or several additives selected from the group including olive oil, rape oil, synthetic mono-, di- and triglycerides, paraffin oils, silicone oils and waxes.

8. Use of a food casing as claimed in any of claims 1 to 7 for producing coarse spreadable sausages, smoked cooked sausages or smoked ham sausages.

## Revendications

1. Enveloppe pour produit alimentaire, en forme de boyau, à base de cellulose, comportant un revêtement présent sur sa face interne, pour l'amélioration de l'aptitude à la séparation par pelage de l'enveloppe d'avec le contenu, caractérisée en ce que le revêtement contient des alginates, de l'acide alginique, des chitosanes ou une association de ceux-ci.

2. Enveloppe pour produit alimentaire selon la revendication 1, caractérisée en ce qu'il s'agit d'une enveloppe pour saucisses.

3. Enveloppe pour produit alimentaire selon la revendication 1 ou 2, caractérisée en ce que la cellulose est mise sous forme d'un boyau ne presentant aucune soudure, par coagulation et régénération à partir d'une solution de viscose.

4. Enveloppe pour produit alimentaire selon l'une des revendications 1 à 3, caractérisée en ce que la quantité appliquée d'alginate, d'acide alginique, de chitosane ou d'une association de ces substances se situe dans la plage allant de 5 à 100 mg/m² de poids sec de l'enveloppe pour produit alimentaire.

5. Enveloppe pour produit alimentaire selon la revendication 4, caractérisée en ce que la quantité appliquée du (des) composant(s) actif(s) se situe dans la plage allant de 10 à 70 mg/m² de poids sec.

6. Enveloppe pour produit alimentaire selon l'une des revendications 1 à 5, caractérisée en ce que l'application du revêtement s'effectue à partir d'une composition aqueuse de revêtement ayant une concentration en substance active dans la plage allant de 0,5 à 4,0 % en poids, de préférence dans la plage allant de 1 à 3 % en poids, par rapport au poids total de la composition aqueuse de revêtement.

7. Enveloppe pour produit alimentaire selon l'une des revendications 1 à 6, caractérisée en ce que le revêtement contient encore un ou plusieurs additifs, choisis parmi l'huile d'olive, l'huile de colza, des mono-, di- et tri-glicérides synthétiques, des huiles de paraffine, des huiles de silicone et des cires.

8. Utilisation d'une enveloppe pour produit alimentaire selon l'une des revendications 1 à 7, pour la fabrication de saucisse hachée gros de type *Mettwurst*, de saucisse fumée à bouillir ou de saucisse de chair fumée de type *Fleischwurst*.
